# EUROPÄISCHE PATENTSCHRIFT

(11) **EP 3 607 616 B1**
(45) Veröffentlichungstag und Bekanntmachung des Hinweises auf die Patenterteilung: **25.08.2021**
(21) Anmeldenummer: 18720966.3
(22) Anmeldetag: 26.03.2018
(51) Int. Cl.: H01R 13/52, F16B 33/00, B65D 41/00, C09K 3/10

(54) **MIT DICHTMASSE GEFÜLLTE KUNSTSTOFFKAPPEN ALS KOMBINIERTER SCHUTZ GEGEN TREIBSTOFF UND HYDRAULIKÖL SOWIE GEGEN BLITZSCHLAG**
PLASTIC CAPS FILLED WITH SEALING COMPOUND AS COMBINED PROTECTION AGAINST FUEL AND HYDRAULIC FLUID AND AGAINST LIGHTNING STRIKES
BOUCHONS EN PLASTIQUE REMPLIS DE MASSE D'ÉTANCHÉITÉ EMPLOYÉS COMME PROTECTION COMBINÉE CONTRE LE CARBURANT ET L'HUILE HYDRAULIQUE AINSI QUE CONTRE LA FOUDRE

(30) Priorität: 03.04.2017 DE 102017205634
(43) Veröffentlichungstag der Anmeldung: 12.02.2020
(73) Patentinhaber: Chemetall GmbH, 60487 Frankfurt (DE)
(72) Erfinder: BUROCK, Heinz, 60487 Frankfurt am Main (DE); BECKER, Hendrik, 60487 Frankfurt am Main (DE)
(74) Vertreter: BASF IP Association
(86) Internationale Anmeldenummer: PCT/EP2018/057572
(87) Internationale Veröffentlichungsnummer: WO 2018/184878

(56) Entgegenhaltungen:
- EP-A1- 2 604 893
- WO-A1-2018/019848
- US-A1- 2017 008 636

## Beschreibung

Die vorliegende Erfindung liegt auf dem Gebiet der Abdichtung von Verbindungselementen im Flugzeugbau. Sie bezieht sich auf mit Dichtmasse gefüllte Kunststoffkappen, welche als kombinierter Schutz gegen Treibstoff und Hydrauliköl sowie gegen Blitzschlag fungieren. Zudem beinhaltet die Erfindung ein Verfahren zur Befüllung und Applikation solcher Kunststoffkappen sowie ein entsprechendes Flugzeug.

In der Flugzeugindustrie werden Verbindungselemente, insbesondere Nieten, Nietköpfe und Schraubverbindungen mit Dichtmasse überzogen, um sie gegen Treibstoff und Hydrauliköl abzudichten und vor Korrosion durch Feuchtigkeit als auch elektrochemische Reaktion zu schützen.

Durch eine solche Abdichtung wird zudem ein möglicher Verlust von Treibstoff über undichte Stellen an den Verbindungselementen unterbunden, als auch ein Druckverlust innerhalb des Flugzeugs verhindert.

An besonders gefährdeten Stellen eines Flugzeugs werden auch spezielle, mit Dichtmasse gefüllte Kunststoffkappen (= Dichtkappen/Seal Caps) verwendet, die durch ihre aufwendige Konstruktion - in Form eines zweischaligen Aufbaus mit integriertem Luftspalt - zusätzlich vor Blitzschlag schützen sollen.

Sowohl das Befüllen dieser Kappen mit Dichtmasse als auch ihre Applikation, d.h. ihre Montage auf den abzudichtenden Verbindungelementen ist sehr aufwendig. Zudem muss die Oberfläche der Kappen lackiert sein, um eine gute Haftung der Dichtmasse an der Innenseite zu gewährleisten.

Einer weiten Verbreitung dieser Technik steht bislang die wenig wirtschaftliche Herstellung sowie Montage besagter Dichtkappen im Weg. EP2604893A1 beschreibt klassische Kunststoffkappen zur Abdichtung von Verbindungselementen im Flugzeugbau.

Aufgabe der vorliegenden Erfindung war es daher, mit Dichtmasse gefüllte Kunststoffkappen zur Abdichtung von Verbindungselementen im Flugzeugbau gegen Flüssigkeiten bereitzustellen, wobei diese Kunststoffkappen als kombinierter Schutz gegen Treibstoff und Hydrauliköl, insbesondere solches basierend auf Tributylphosphat, sowie gegen Blitzschlag fungieren und wirtschaftlich hergestellt sowie appliziert werden können.

Insbesondere sollten diese Kappen ein erweitertes Einsatzspektrum bzw. höhere Variabilität aufweisen als die bisherigen Dichtkappen sowie eine deutliche Erhöhung der Taktrate beim Flugzeugbau ermöglichen.

Die Aufgabe wurde gelöst durch eine Kunststoffkappe nach Anspruch 1, ein Verfahren nach Anspruch 11 sowie ein Flugzeug nach Anspruch 13 Bevorzugte Ausführungsformen werden jeweils in den abhängigen Ansprüchen beschrieben.

Die erfindungsgemäße Kunststoffkappe zur Abdichtung von Verbindungselementen im Flugzeugbau besteht zum überwiegenden Teil aus mindestens einem Hochleistungspolymer, weist eine Durchschlagsfestigkeit von mindestens 10 kV/mm nach DIN IEC 60243 auf und ist mit einer Dichtmasse gefüllt, welche ein hohes Energieabsorptionsvermögen sowie mindestens einen Füllstoff ausgewählt aus der Gruppe bestehend aus mit Gas und/oder Luft gefüllten Hohlfüllkörpern aufweist. Dabei sind die Kunststoffkappe und die Dichtmasse kohäsiv miteinander verbunden. Das Hochleistungspolymer besteht dabei aus einem Polyetherimid und/oder einem Polyphenylensulfid.

### Definitionen:

Wenn vorliegend von "Hochleistungspolymer" die Rede ist, sind Homo- sowie Copolymere gemeint, welche sich durch hohe Chemikalien- und Temperaturbeständigkeit auszeichnen.

Dass die "Kunststoffkappe [...] zum überwiegenden Teil aus mindestens einem Hochleistungspolymer besteht", bedeutet, dass sie noch einen Gehalt von weniger als 50 Gew.-% an anderen Bestandteilen enthalten kann, bei denen es sich nicht um Hochleistungspolymere handelt.

Unter einer "Dichtmasse" soll vorliegend stets die Mischung zweier Dichtmassenkomponenten gemeint sein, welche chemisch, thermisch und/oder durch aktinische Strahlung ausgehärtet werden kann und die zumindest teilweise noch nicht ausgehärtet ist.

Dass "die Kunststoffkappe und die Dichtmasse kohäsiv miteinander verbunden sind" ist in dem Sinne zu verstehen, dass die eingefüllte Dichtmasse und das mindestens eine Hochleistungspolymer sich nicht zerstörungsfrei trennen lassen oder sich unter den beim Betrieb eines Flugzeugs üblichen Bedingungen nicht trennen.

Wenn bei dem erfindungsgemäßen Verfahren von der "Befüllung und Applikation [...] der Kunststoffkappe", also einer Kunststoffkappe die Rede ist, soll auch die Durchführung des Verfahrens mit mehr als einer Kunststoffkappe mitumfasst sein.

Durch die Kombination hervorragender Abdichtungseigenschaften gegen Treibstoff, insbesondere gegen Kerosin, mit der Beständigkeit gegen Hydrauliköl, insbesondere solches basierend auf Tributylphosphat wie Skydrol® (Solutia, Inc.), sowie mit der Fähigkeit zur Energieabsorption bei gleichzeitigem hohen Durchschlagswiderstand gegen Blitzschlag weisen die erfindungsgemäßen, mit Dichtmasse gefüllten Kunststoffkappen ein weiteres Anwendungsspektrum auf als herkömmliche Seal Caps, welche nur in Bereichen des Flugzeugs eingesetzt werden, in denen eine Abdichtung von Niet- oder Schraubverbindungen im Vordergrund steht.

Bei der Applikation der erfindungsgemäßen Dichtkappen ist eine genaue Differenzierung zwischen verschiedenen kritischen Bereichen - solchen mit Blitzschlaganfälligkeit und solchen, welche nur allgemeinen abzudichten sind - weniger wichtig als bei herkömmlichen Seal Caps. Dadurch kann die Taktrate beim Flugzeugbau deutlich erhöht werden kann.

Im Folgenden werden die bevorzugten Merkmale bzw. Ausführungsformen der erfindungsgemäßen, mit Dichtmasse gefüllten Kunststoffkappen erläutert.

Das mindestens eine Hochleistungspolymer der Kunststoffkappe ist ausgewählt aus der Gruppe bestehend aus Polyetherimid (PEI) und Polyphenylensulfid (PPS).

Die vorgenannten Hochleistungspolymere weisen eine besonders hohe Beständigkeit sowohl gegen den Treibstoff Kerosin als auch gegen auf Tributylphosphat basierende Hydrauliköle wie Skydrol® (Solutia, Inc.) auf.

Besonders bevorzugt ist das mindestens eine Hochleistungspolymer ein Polyetherimid. Polyetherimide weisen nämlich eine Durchschlagfestigkeit von 16 kV/mm nach DIN IEC 60243 auf. Ganz besonders bevorzugt handelt es sich bei dem mindestens einen Hochleistungspolymer um ULTEM™ 9075 resin (Sabic Innovative Plastics).

Die Durchschlagsfestigkeit der Kunststoffkappe liegt bevorzugt bei mindestens 13 kV/mm und besonders bevorzugt bei mindestens 15 kV/mm nach DIN IEC 60243. Eine hohe Durchschlagfestigkeit hat den Vorteil, die Schutzwirkung der gefüllten Kunststoffkappe gegen Blitzschlag noch weiter zu erhöhen.

Das mindestens eine Hochleistungspolymer kann linear oder vernetzt vorliegen. Vorteilhafterweise ist es schlagzäh modifiziert, d.h. mit Glasfasern, Kohlefasern und/oder Mineralfasern gefüllt und so mechanisch verstärkt.

Bevorzugt weist das mindestens eine Hochleistungspolymer eine Wasseraufnahme von höchstens 1,5 %, besonders bevorzugt von höchstens 0,4 % und ganz besonders bevorzugt von höchstens 0,2 % auf. Eine niedrige Wasseraufnahme ist von Vorteil, da hierdurch die elektrische Leitfähigkeit weiter herabgesetzt wird und sich die Materialeigenschaften nicht verändern.

Vorzugsweise ist die in die Kunststoffkappe gefüllte Dichtmasse eine solche auf Basis von Polysulfid und/oder Polythioether. Besonders bevorzugt handelt es sich bei ihr um ein Polysulfid und/oder einen Polythioether in Kombination mit Mangandioxid, einer Isocyanatverbindung, einem Isocyanatprepolymer und/oder einer Epoxidverbindung als Härter.

Bevorzugt weist die Dichtmasse eine Dichte zwischen 0,7 und 1,5 g/cm³, besonders bevorzugt zwischen 1,1 und 1,3 g/cm³ auf. Eine Dichte innerhalb der genannten Grenzen ist von Vorteil, da so eine Gewichtsreduzierung der aufgetragenen Dichtmasse erzielt wird.

Die erfindungsgemäße Verwendung von mit Gas und/oder Luft gefüllten Hohlfüllkörpern als Füllstoffe hat den Vorteil, dass diese durch den mikrozellulären Charakter energieabsorbierend wirken. Bei denen mit Gas und/oder Luft gefüllten Hohlfüllkörpern handelt es sich dabei bevorzugt um Microballons.

Die Dichtmasse weist dabei vorzugsweise einen Gehalt an dem mindestens einen Füllstoff im Bereich von 1 bis 13 Gew.-%, besonders bevorzugt im Bereich von 4 bis 7 Gew.-% auf. Ein Gehalt innerhalb der genannten Grenzen ist von Vorteil, da so die mechanischen Kennwerte der Dichtmasse noch erfüllt werden.

Gemäß einer ganz besonders bevorzugten Ausführungsform enthält die Dichtmasse eine Füllstoffkombination bestehend aus mindestens einem Füllstoff ausgewählt aus der Gruppe bestehend aus mit Gas und/oder Luft gefüllten Hohlfüllkörpern und aus mindestens einem weiteren Füllstoff ausgewählt aus der Gruppe bestehend aus mineralischen und polymeren, nicht mit Gas und/oder Luft gefüllten Füllstoffen. Die Verwendung der genannten Füllstoffkombinationen hat den Vorteil, dass die besonderen Anforderungen an eine solche Dichtmasse erfüllt werden. Bei denen mit Gas und/oder Luft gefüllten Hohlfüllkörpern handelt es sich auch hier bevorzugt um Microballons.

Die Dichtmasse weist dabei vorzugsweise einen Gehalt an dem mindestens einen mit Gas und/oder Luft gefüllten Hohlfüllkörper im Bereich von 1 bis 13 Gew.-%, besonders bevorzugt im Bereich von 4 bis 7 Gew.-%, und einen Gehalt an dem mindestens einen weiteren Füllstoff im Bereich von 10 bis 25 Gew.-%, besonders bevorzugt im Bereich von 15 bis 23 Gew.-% auf. Gehalte innerhalb der genannten Grenzen sind von Vorteil, da so besonders positive Materialeigenschaften, insbesondere hinsichtlich Zugfestigkeit, Dehnung sowie Beständigkeit resultieren.

Die Kunststoffkappe und die in diese gefüllte Dichtmasse sind vorzugsweise dadurch kohäsiv miteinander verbunden, dass eine chemische Anbindung von Dichtmasse und Kunststoffkappe erzielt wird.

Gegenstand der vorliegenden Erfindung ist außerdem ein Verfahren zur Befüllung und Applikation der vorstehend beschriebenen erfindungsgemäßen Kunststoffkappe, bei dem die Kunststoffkappe mittels eines Dosierroboters oder von Hand mit der vorstehend beschriebenen Dichtmasse befüllt, anschließend mittels eines automatisierten Verfahrensschrittes oder händisch auf ein Verbindungselement eines Flugzeugs appliziert und die Dichtmasse ausgehärtet wird.

Die Aushärtung wird dabei bevorzugt thermisch und/oder durch IR-Strahlen vorgenommen.

Das erfindungsgemäße Verfahren zeichnet sich durch besondere Wirtschaftlichkeit aus, da es die Verwendung von vorgeformten Kunststoffkappen, die mit einer frisch gemischten Dichtmasse unmittelbar vor der Applikation befüllt werden, beinhaltet.

Da keine spezielle Logistik für Transport und Lagerung der Kunststoffkappen notwendig und die Dichtmasse mit notwendiger Zulassung in der Regel am Bauplatz vorhanden ist, weist das erfindungsgemäße Verfahren zudem eine hohe Variabilität auf.

Durch die Verwendung der erfindungsgemäßen, mit Dichtmasse gefüllten Kunststoffkappen ist eine Reduzierung der händischen Tätigkeit beim Füllen und Aufsetzen der Dichtkappen möglich und hierdurch wiederum eine deutliche Erhöhung der Taktrate beim Flugzeugbau.

Gemäß einer bevorzugten Ausführungsform wird die Kunststoffkappe daher mittels eines Dosierroboters mit der Dichtmasse befüllt und anschließend mittels eines automatisierten Verfahrensschrittes auf ein Verbindungselement eines Luftfahrzeuges appliziert.

Schließlich bezieht sich die vorliegende Erfindung noch auf ein Flugzeug mit mindestens einem Verbindungselement, auf das eine erfindungsgemäße Kunststoffkappe durch das erfindungsgemäße Verfahren appliziert wurde.

### Beispiele

Erfindungsgemäße blitzsichere Kunststoffkappen wurden auf ihre Beständigkeit gegen Hydrauliköl und Treibstoff getestet.

### Testaufbau:

Titanschrauben wurden mithilfe von Titanmuttern auf entsprechend durchbohrten Kohlefaserplatten montiert.

Kunststoffkappen, die aus einem Polyetherimid (PEI) bestanden und mit einer Dichtmasse gefüllt waren, bei der es sich um ein Polysulfid handelte, das mit bis zu 4 Gew.-% mit Gas gefüllte Microballons enthielt, wurde auf besagte Schrauben und Muttern aufgesetzt. Die Dichtmasse wurde dann bei 23 °C für 14 Tage ausgehärtet, wobei die Kunststoffkappe und die Dichtmasse kohäsiv miteinander verbunden wurden.

Anschließend wurde ein Teil der mit ausgehärteter Dichtmasse gefüllten Kunststoffkappen bei 70 °C für 168 Stunden in Hydrauliköl (HyJet IV A⁺) gelagert, ein anderer Teil hingegen bei 100 °C für 336 Stunden in Kerosin (Jet A1).

Die in Hydrauliköl gelagerten, die in Kerosin gelagerten sowie die nicht eingelagerten Kunststoffkappen wurden dann jeweils in einem Metallblock, der eine entsprechende Aussparung aufwies, fixiert. Die Metallblöcke wurden nun mittels einer Maschine senkrecht von den Kohlefaserplatten weggezogen. Dabei wurde die Kraft ermittelt, die erforderlich war, um die Kunststoffkappen von den Schrauben und Muttern abzuziehen ("pull-off force").

Zudem wurde nach erfolgtem Abziehen der Kunststoffkappen noch das Kohäsionsversagen auf den Kunststoffkappen sowie die visuelle Erscheinung der Dichtmasse durch Inaugenscheinnahme ermittelt. Das Kohäsionsversagen ist hierbei so definiert, dass die Nietverbindung als auch die Kunststoffkappe vollständig mit Dichtmasse bedeckt ist.

Die erhaltenen Ergebnisse sind in der folgenden Tab. 1 zusammengefasst.

**Tabelle 1**

| Lagerung der Kunststoffkappen in ... | Pull-off force in N | Kohäsionsversagen auf den Kunststoffkappen in % | Visuelle Erscheinung der Dichtmasse. |
|---|---|---|---|
| --- | 354 | 100 | in Ordnung, normales Bruchbild |
| Hydrauliköl | 312 | 100 | in Ordnung, normales Bruchbild |
| Kerosin | 332 | 100 | in Ordnung, normales Bruchbild |

Wie **Tab. 1** zu entnehmen kam es zu keiner wesentliche Änderung der Ergebnisse, wenn die Kunststoffkappen in Hydrauliköl oder in Kerosin eingelagert wurden.

## Patentansprüche

1. Kunststoffkappe zur Abdichtung von Verbindungselementen im Flugzeugbau, **dadurch gekennzeichnet, dass** sie zum überwiegenden Teil aus mindestens einem Hochleistungspolymer besteht, eine Durchschlagsfestigkeit von mindestens 10 kV/mm nach DIN IEC 60243 aufweist und mit einer Dichtmasse gefüllt ist, welche ein hohes Energieabsorptionsvermögen sowie mindestens einen Füllstoff ausgewählt aus der Gruppe bestehend aus mit Gas und/oder Luft gefüllten Hohlfüllkörpern aufweist, wobei die Kunststoffkappe und die Dichtmasse kohäsiv miteinander verbunden sind und das mindestens eine Hochleistungspolymer ein Polyetherimid und/oder ein Polyphenylensulfid ist.

2. Kunststoffkappe nach Anspruch 1, **dadurch gekennzeichnet, dass** das mindestens eine Hochleistungspolymer ein Polyetherimid ist.

3. Kunststoffkappe nach einem der vorhergehenden Ansprüche, **dadurch gekennzeichnet, dass** das mindestens eine Hochleistungspolymer schlagzäh modifiziert ist.

4. Kunststoffkappe nach einem der vorhergehenden Ansprüche, **dadurch gekennzeichnet, dass** die Dichtmasse eine solche auf Basis von auf Basis von Polysulfid und/oder Polythioethersulfid ist.

5. Kunststoffkappe nach Anspruch 4, **dadurch gekennzeichnet, dass** die Dichtmasse ein Polysulfid und/oder ein Polythioether in Kombination mit Mangandioxid, einer Isocyanatverbindung, einem Isocyanatprepolymer und/oder einer Epoxidverbindung als Härter ist.

6. Kunststoffkappe nach einem der vorhergehenden Ansprüche, **dadurch gekennzeichnet, dass** die Dichtmasse eine Dichte zwischen 0,7 und 1,5 g/cm³ aufweist.

7. Kunststoffkappe nach einem der vorhergehenden Ansprüche, **dadurch gekennzeichnet, dass** es sich bei den Hohlfüllkörpern des mindestens einen Füllstoffs um Microballons handelt.

8. Kunststoffkappe nach einem der vorhergehenden Ansprüche, **dadurch gekennzeichnet, dass** die Dichtmasse einen Gehalt an dem mindestens einen Füllstoff im Bereich von 1 bis 13 Gew.-% aufweist.

9. Kunststoffkappe nach einem der vorhergehenden Ansprüche, **dadurch gekennzeichnet, dass** die Dichtmasse eine Füllstoffkombination bestehend aus mindestens einem Füllstoff ausgewählt aus der Gruppe bestehend aus mit Gas und/oder Luft gefüllten Hohlfüllkörpern und aus mindestens einem weiteren Füllstoff ausgewählt aus der Gruppe bestehend aus mineralischen und polymeren, nicht mit Gas und/oder Luft gefüllten Füllstoffen enthält.

10. Kunststoffkappe nach einem der vorhergehenden Ansprüche, **dadurch gekennzeichnet, dass** die Kunststoffkappe und die Dichtmasse durch eine chemische Anbindung kohäsiv miteinander verbunden sind.

11. Verfahren zur Befüllung und Montage einer Kunststoffkappe nach einem der vorhergehenden Ansprüche, **dadurch gekennzeichnet, dass** die Kunststoffkappe mittels eines Dosierroboters oder von Hand mit einer Dichtmasse nach einem der vorhergehenden Ansprüche befüllt, anschließend mittels eines automatisierten Verfahrensschrittes oder händisch auf eine Verbindungselement eines Flugzeuges appliziert und die Dichtmasse ausgehärtet wird.

12. Verfahren nach Anspruch 11, **dadurch gekennzeichnet, dass** die Kunststoffkappe mittels eines Dosierroboters mit der Dichtmasse befüllt und anschließend mittels eines automatisierten Verfahrensschrittes auf ein Verbindungselement eines Flugzeuges appliziert wird.

13. Flugzeug mit mindestens einem Verbindungselement, auf das eine Kunststoffkappe nach einem der Ansprüche 1 bis 10 durch ein Verfahren nach einem der Ansprüche 11 oder 12 appliziert wurde.

## Claims

1. A plastic cap for sealing of connecting elements in aircraft construction, **which** consists predominantly of at least one high-performance polymer, has a breakdown resistance of at least 10 kV/mm to DIN IEC 60243 and has been filled with a sealing compound having a high energy absorption capacity and including at least one filler selected from the group consisting of gas- and/or air-filled hollow packings, where the plastic cap and the sealing compound are cohesively bonded to one another and the at least one high-performance polymer is a polyetherimide and/or a polyphenylene sulfide.

2. The plastic cap according to claim 1, **wherein** the at least one high-performance polymer is a polyetherimide.

3. The plastic cap according to either of the preceding claims, **wherein** the at least one high-performance polymer has been impact-modified.

4. The plastic cap according to any of the preceding claims, **wherein** the sealing compound is one based on based on polysulfide and/or polythioether sulfide.

5. The plastic cap according to claim 4, **wherein** the sealing compound is a polysulfide and/or a polythioether in combination with manganese dioxide, an isocyanate compound, an isocyanate prepolymer and/or an epoxy compound as hardener.

6. The plastic cap according to any of the preceding claims, **wherein** the sealing compound has a density between 0.7 and 1.5 g/cm³.

7. The plastic cap according to any of the preceding claims, **wherein** the hollow packings in the at least one filler are microballoons.

8. The plastic cap according to any of the preceding claims, **wherein** the sealing compound has a content of the at least one filler in the range from 1% to 13% by weight.

9. The plastic cap according to any of the preceding claims, **wherein** the sealing compound comprises a filler combination consisting of at least one filler selected from the group consisting of gas- and/or air-filled hollow packings and of at least one further filler selected from the group consisting of mineral and polymeric, non-gas- and/or -air-filled fillers.

10. The plastic cap according to any of the preceding claims, **wherein** the plastic cap and the sealing compound are cohesively bonded to one another by a chemical attachment.

11. A method of filling and mounting a plastic cap according to any of the preceding claims, **wherein** the plastic cap is filled with a sealing compound according to any of the preceding claims by means of a metering robot or manually, then applied to a connecting element in an aircraft by means of an automated method step or manually, and the sealing compound is cured.

12. The method according to claim 11, **wherein** the plastic cap is filled with the sealing compound by means of a metering robot and then applied to a connecting element in an aircraft by means of an automated method step.

13. An aircraft having at least one connecting element to which a plastic cap according to any of claims 1 to 10 has been applied by a method according to either of claims 11 and 12.

## Revendications

1. Capuchon en matière synthétique destiné à l'étanchéité d'éléments de liaison dans la construction aéronautique, **caractérisé en ce qu'**il est majoritairement en au moins un polymère à hautes performances, présente une rigidité diélectrique d'au moins 10 kV/mm selon DIN IEC 60243 et est rempli d'un composé d'étanchéité qui a une capacité d'absorption d'énergie élevée et comporte au moins une charge choisie dans le groupe comprenant des corps de remplissage creux remplis de gaz et/ou d'air, le capuchon en matière synthétique et le composé d'étanchéité étant reliés de manière cohésive l'un à l'autre et l'au moins un polymère à hautes performances étant un polyétherimide et/ou un polysulfure de phénylène.

2. Capuchon en matière synthétique selon la revendication 1, **caractérisé en ce que** l'au moins un polymère à haute performance est un polyétherimide.

3. Capuchon en matière synthétique selon l'une des revendications précédentes, **caractérisé en ce que** l'au moins un polymère à hautes performances est à résilience modifiée.

4. Capuchon en matière synthétique selon l'une des revendications précédentes, **caractérisé en ce que** le composé d'étanchéité est à base de à base de polysulfure et/ou de polythioéther sulfure.

5. Capuchon en matière synthétique selon la revendication 4, **caractérisé en ce que** le composé d'étanchéité est un polysulfure et/ou un polythioéther en association avec du dioxyde de manganèse, un composé isocyanate, un prépolymère isocyanate et/ou un composé époxy comme durcisseur.

6. Capuchon en matière synthétique selon l'une des revendications précédentes, **caractérise en ce que** le composé d'étanchéité a une densité comprise entre 0,7 et 1,5 g/cm³.

7. Capuchon en matière synthétique selon l'une des revendications précédentes, **caractérisé en ce que** les corps de remplissage creux de l'au moins une charge sont des microballons.

8. Capuchon en matière synthétique selon l'une des revendications précédentes, **caractérisé en ce que** le composé d'étanchéité a une teneur en l'au moins une charge comprise entre 1 et 13 % en poids.

9. Capuchon en matière synthétique selon l'une des revendications précédentes, **caractérisé en ce que** le composé d'étanchéité est une combinaison de charges comprenant au moins une charge choisie dans le groupe comprenant des corps de remplissage creux remplis de gaz et/ou d'air et au moins une autre charge choisie dans le groupe comprenant des charges minérales et polymériques non remplies de gaz et/ou d'air.

10. Capuchon en matière synthétique selon l'une des revendications précédentes, **caractérisé en ce que** le capuchon en matière synthétique et le composé d'étanchéité sont liés de manière cohésive l'un à l'autre par une liaison chimique.

11. Procédé de remplissage et de montage d'un capuchon en matière synthétique selon l'une des revendications précédentes, **caractérisé en ce que** le capuchon en matière synthétique est rempli d'un composé d'étanchéité selon l'une des revendications précédentes au moyen d'un robot doseur ou à la main, puis est appliqué sur un élément de liaison d'un aéronef au moyen d'une étape de procédé automatisée ou à la main et le composé d'étanchéité est durci.

12. Procédé selon la revendication 11, **caractérisé en ce que** le capuchon en matière synthétique est rempli de composé d'étanchéité au moyen d'un robot doseur puis est appliqué sur un élément de liaison d'un aéronef au moyen d'une étape de procédé automatisée.

13. Aéronef comprenant au moins un élément de liaison sur lequel a été appliqué un capuchon en matière synthétique selon l'une des revendications 1 à 10 par un procédé selon l'une des revendications 11 et 12.
